# EUROPEAN PATENT SPECIFICATION

(11) **EP 2 936 207 B1**
(45) Date of publication and mention of the grant of the patent: **18.10.2017**
(21) Application number: 13821087.7
(22) Date of filing: 19.12.2013
(51) Int. Cl.: G01T 1/24

(54) **READOUT CIRCUITS FOR MULTI-CHANNEL PHOTOMULTIPLIER ARRAYS**
AUSLESESCHALTUNGEN FÜR FOTOVERVIELFACHERARRAYS MIT MEHREREN KANÄLEN
CIRCUITS DE LECTURE POUR RÉSEAUX DE PHOTOMULTIPLICATEUR MULTI-CANAUX

(30) Priority: 20.12.2012 EP 12382516
(43) Date of publication of application: 28.10.2015
(73) Proprietor: Universitat de Barcelona, 08028 Barcelona (ES); Centro De Investigaciones Energéticas, Medioambien, 28040 Madrid (ES)
(72) Inventor: GASCON FORA, David, E-08028 Barcelona (ES); COMERMA MONTELLS, Albert, E-08028 Barcelona (ES); FREIXAS COROMINA, Lluís, E-28040 Madrid (ES)
(74) Representative: ZBM Patents - Zea, Barlocci & Markvardsen
(86) International application number: PCT/EP2013/077305
(87) International publication number: WO 2014/096143

(56) References cited:
- US-A- 5 943 388
- MANUEL D ROLO ET AL: "A 64-channel ASIC for TOFPET applications", 2012 IEEE NUCLEAR SCIENCE SYMPOSIUM AND MEDICAL IMAGING CONFERENCE RECORD (NSS/MIC), 20 November 2012 (2012-11-20), pages 1460-1464, XP055112820, DOI: 10.1109/NSSMIC.2012.6551353 ISBN: 978-1-46-732029-0
- CORSI F ET AL: "A self-triggered CMOS front-end for Silicon Photo-Multiplier detectors", ADVANCES IN SENSORS AND INTERFACES, 2009. IWASI 2009. 3RD INTERNATIONAL WORKSHOP ON, IEEE, PISCATAWAY, NJ, USA, 25 June 2009 (2009-06-25), pages 79-84, XP031498617, ISBN: 978-1-4244-4708-4
- GASCON D ET AL: "Wideband (500 MHz) 16 bit dynamic range current mode input stage for photodetector readout", NUCLEAR SCIENCE SYMPOSIUM AND MEDICAL IMAGING CONFERENCE (NSS/MIC), 2011 IEEE, IEEE, 23 October 2011 (2011-10-23), pages 750-757, XP032121524, DOI: 10.1109/NSSMIC.2011.6154096 ISBN: 978-1-4673-0118-3

## Description

The present invention relates to measurement of radiation and more particularly to readout circuits for multi-channel photomultiplier arrays.

### BACKGROUND ART

Many circuits are known in the art for reading ultra sensitive photosensors such as photomultiplier tubes (PMT) or silicon photomultipliers (SiPM). To fully exploit the performance of PMTs or SiPM the following characteristics are desirable: high-speed and low input impedance, high sensitivity and wide dynamic range (which require a low noise level) and low voltage operation (required for integrated circuit implementations). These characteristics are achieved with readout circuits working in current mode. In recent years, with the advent of solid-state photomultipliers (SiPM, MPPC, GAPDs, etc.) the interest in current mode circuits has increased especially for low voltage and high speed applications.

Traditionally charge sensitive preamplifiers (CSP) based on VFAs (Voltage Feedback Amplifiers) have been used as front end circuits for the read out of radiation detectors of many types (such as semiconductors, photosensors, gaseous, etc). However, those CSPs are quite limited in speed and hence not optimal to achieve good timing resolution or to minimize the effect of pile-up.

For this reason, in many applications the current pulse generated by a PMT or a SiPM is converted to voltage by a small resistor and then read out by a voltage preamplifier. Although this configuration may work in some applications it may not be optimal in terms of noise since this resistor imposes a trade-off between noise and BW. Closed loop (based on VFAs) transimpedance amplifier has better signal to noise ratio (SNR), however its bandwidth is typically limited by stability issues and its dynamic range by the one of the closed loop amplifier.

A better solution is to perform current mode readout with a low input impedance stage, typically with a common gate or common base. Following that stage, the signal is processed inside a chip. This solution offers the following advantages:
- Low noise and high speed may be simultaneously achieved.
- Low input impedance may be useful to improve the time resolution, especially for SiPM because of its large capacitance, and may help to minimize crosstalk and interference issues.
- It may help preserve a good dynamic range even for very deep submicron technologies where supply voltage is limited to 1 or 2 V.

Similar current mode circuits are used in high energy physics (HEP) on big colliders, on medical imaging and on optical communications (for photodiode (PD) or avalanche PD (APD) readout).

Furthermore, some medical applications like computer tomography and optical communications require a wide dynamic range.

Another issue is that both in HEP, astrophysics and in medical imaging, precise time measurements with resolutions below 100 ps are often required, especially for Time-of-Flight (TOF) techniques.

It has long been recognized that by accurately measuring the difference in arrival times of the 511 keV photons coming from positron annihilation, the statistical noise in PET (Positron Emission Tomography) can be reduced.

The timing signal is usually obtained after discrimination of the input signal, thus it is the jitter of the discriminated signal what limits the timing resolution of the electronics. The random jitter (σt) (noise correlated) is proportional to the noise (σn) and inversely proportional to the signal slope dS/dt, hence inversely proportional to the signal BW.

Therefore both the signal to noise ratio and the bandwidth have to be optimized in order to achieve the minimum time resolution. Current mode circuits can be useful to achieve this:
- As discussed above, current mode circuits typically have higher BW, because all signal nodes are low impedance nodes.
- In the case of SiPM, the peak current increases by decreasing the input impedance of the preamplifier. This improves the dS/dt term. However, this trend limits the dynamic range for typical current mode circuits. There are two typical approaches:
   (i) Allow saturation of the preamplifier and perform the energy measurement using a Time-over-Threshold (ToT) technique.
   (ii) Create a double path, one for timing measurement and the other one, with lower gain, for energy measurement. However, dynamic range limitations are still present for this type of current mode solutions at the very front end stage, also referred to as "input stage".

The input stage of a readout circuit may be a current mirror, simple current mirror or cascade current mirror, with several output branches.

In Gascon et al. (cf. D. Gascon et al. "Wideband (500 MHz) 16 bit Dynamic Range Current Mode Input Stage for Photodetector Readout", Nuclear Science Symposium and Medical Imaging Conference (NSS/MIC), 2011 IEEE, 23 October 2011, pp. 750-757; ISBN 978-1-4673-0118-3) a low noise wideband current mode circuit with a cascode configuration of the current amplifiers having a 16 bit dynamic range is disclosed. The circuit is designed as input stage of a transimpedance preamplifier for the readout of the cameras of the Cherenkov Telescope Array project.

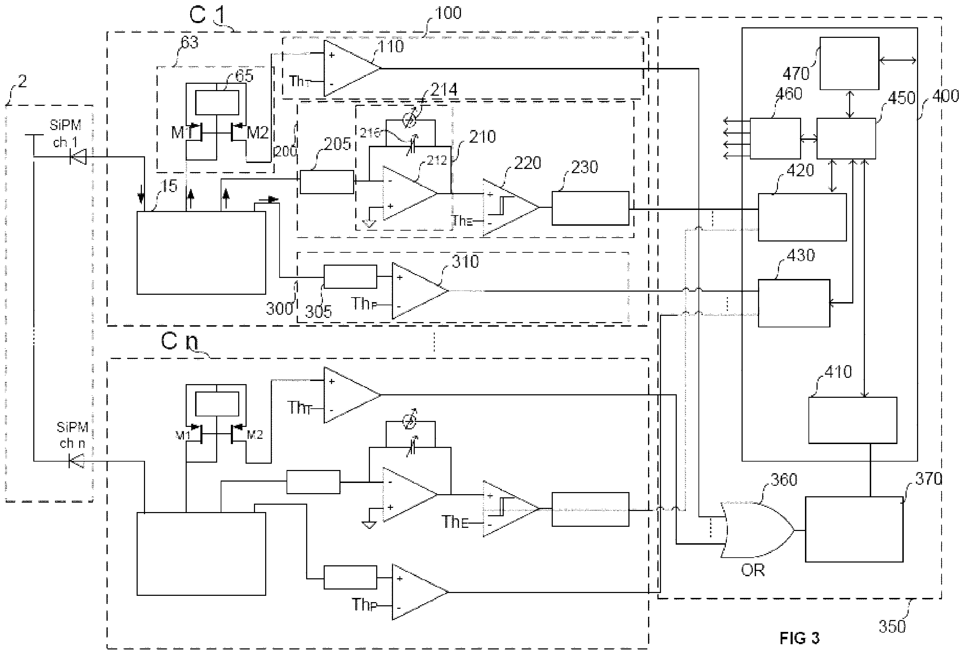

A readout circuit for a photomultiplier array is discussed in Corsi et al. 2007 (cf. F. Corsi et al., "Current-mode front-end electronics for silicon photomultiplier arrays", Advances in Sensors and Interfaces, IWASI 2007. 2nd International Workshop On, IEEE, PI, 26 June 2007, pp. 1-6; ISBN 978-1-4244-1244-0). In Fig. 8 thereof, a readout circuit coupleable to a photo-multiplier (SiPM) is disclosed. Although in Fig. 3, 4 and 5 thereof a connection to the anode is depicted, the actual readout circuit discussed with reference to Fig. 8 of Corsi et al., 2007 is arranged to be connected to the cathode of the SiPM. The reason is that the transistors M4 and M5 in Fig. 8 of Corsi et al., 2007 are pMOS transistors, therefore sensitive to negative input currents (i.e. current flowing from the input stage to the SiPM).

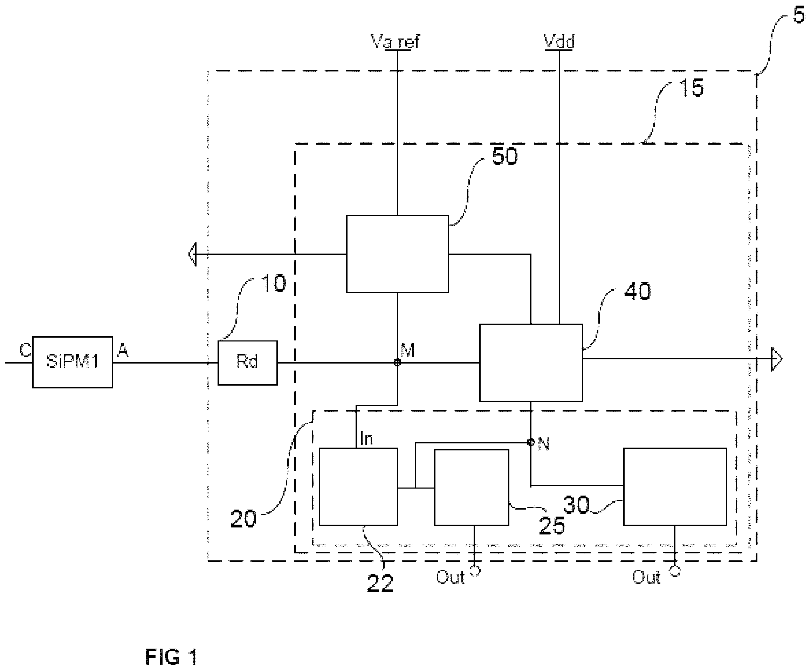

Furthermore, in Corsi et al., 2009 (cf. F. Corsi et al., "A self triggered CMOS front-end for Silicon Photo-Multiplier Detectors", Advances in Sensors and Interfaces, 2009. IWASI 2009. 3rd International Workshop On, IEEE, Piscataway, NJ, USA, 25 June 2009, pp. 79-84, ISBN 978-1-4244-4708-4), an input stage circuit similar to that of Fig. 8 of Corsi et al. 2007 is clearly shown, in Fig. 1 thereof, connected to the cathode of a SiPM.

As mentioned above, current mode circuits with low input impedance are needed to achieve good timing performances. Furthermore, additional feedback is required to further decrease the input impedance and linearize it. This is the case of the circuit described in the above mentioned Corsi et al., 2007.

However, the circuit proposed in Corsi et al. 2007 proposes cathode connection to the SiPM. This means that the circuit proposed thereof can be coupled only to individual SiPM cathodes. This possibility is available only when the cathode is not common.

However, in many cases, only the individual anodes of a SiPM array are available and not the individual cathodes which are common. Therefore, in such cases, i.e. common cathode SiPM arrays, it is not possible to connect a readout circuit as the one proposed by Corsi et al. 2007.

Furthermore it is often required to be able to control the voltage at the input terminal of a read-out circuit of SiPM arrays. This is required in order to control the operation point (reverse bias voltage) of every single SiPM of the array. Although this may be possible in the current mode circuit proposed by Corsi et al. 2007, there is a clear disadvantage in that it does not control this voltage directly. Instead, it sets the operation point indirectly by relying in open loop characteristics of the transistors and other components. Therefore, the operating point accuracy is affected by temperature and process variations of these components.

In Rolo et al., 2012, (Rolo et al., "A 64-channel ASIC for TOFPET applications", 2012, IEEE Nuclear Science Symposium and Medical Imaging Conference), a 64-channel ASIC for TOF PET imaging is presented. The circuit provides time and energy measurements of events produced by a SiPM coupled to a L(Y)SO fast scintillator. It further discloses a closed-loop amplifier input stage and a 50 ps time binning TDC based on analogue interpolation.

It would be desirable to provide a readout circuit for a photomultiplier array where at least some of the aforementioned problems are partially solved.

### SUMMARY OF THE INVENTION

The terms "base", "collector", and "emitter" are typically used to describe the terminals of a bipolar junction transistor. Accordingly, the terms "gate", "source", and "drain" are typically used to describe the terminals of a field-effect transistor. For the purposes of this disclosure the terminal terms may be used interchangeably without implying the type of amplifier used unless explicitly stated.

In a first aspect of the invention a readout circuit coupleable to at least one photodiode of a photomultiplier array is proposed. The readout circuit comprises at least one channel circuit coupleable to the at least one photodiode.

The channel circuit comprises a first resistor, coupleable at one end to the anode of the at least one photodiode, and an input stage, coupled to the other end of the first resistor. The input stage comprises a current mirror configuration having at least a first gain path. The first gain path has an input branch with at least one input amplifier and a first output branch with at least one mirror amplifier. The mirror amplifier has its base and emitter connected to the base and emitter of the input amplifier of the input branch. The input stage further comprises a high frequency feedback circuit arranged between the base of the input amplifier and the input of the current mirror configuration.

The HF loop circuit acts as a shunt feedback. It introduces negative feedback to stabilize voltage at the input of the input stage.

The high frequency feedback circuit comprises at least a first amplifier and a second amplifier. The first amplifier has a collector coupled to a power supply voltage, a base coupled to a collector of the second amplifier and an emitter coupled to the base of the input amplifier and to earth via a current source. The second amplifier has a base coupled to earth via a first capacitor and an emitter coupled to the input of the current mirror configuration.

In some embodiments, the readout circuit may further comprise a servo controller having a first end coupled to the base of the first amplifier and a second end coupled to the power supply voltage.

The readout circuit further comprises a low frequency feedback circuit coupled between the base of the second amplifier and the input of the input branch. The second feedback is added to control the DC and LF value of the voltage at the input of the input stage.

In some embodiments, the low frequency feedback circuit may comprise an Operational Transconductance Amplifier (OTA) having a positive input coupled to a voltage supply reference, a negative input coupled to the emitter of the second amplifier and an output coupled to the base of the second amplifier.

In some embodiments the output branch of the first gain path may further comprise a, a third amplifier, a fourth amplifier and a saturation control circuit. The third amplifier may have a collector and a base coupled to the output of the mirror amplifier and an emitter coupled to the power supply voltage. The fourth amplifier may have a base coupled to the base of the third amplifier and an emitter coupled to the power supply voltage. The saturation control circuit may be coupled between the power supply voltage and the base of the third and fourth amplifiers. The collector of the fourth amplifier may be an output of the first gain path.

In some embodiments the readout circuit may further comprise a time measurement unit coupled to an output of the first gain path for receiving a first current signal and generating a time measurement signal. The time measurement unit may comprise a fast current discriminator for generating the time measurement signal. The fast current discriminator may have a first input for receiving the first current signal and a second input for receiving a time threshold value.

In some embodiments the current mirror configuration may further comprise a second gain path having a second output branch for generating a second current signal. The readout circuit may further comprise an energy measurement unit coupled to an output of the second output branch for receiving the second current signal and generating an energy measurement signal. The energy measuring unit may comprise a first part in series with a second part. The first part may comprise a tunable filter coupled to a tunable integrator block. The second part may comprise a hysteresis comparator coupled to a first TDC.

In some embodiments the current mirror configuration may further comprise a third gain path having a third output branch for generating a third current signal. The readout circuit may further comprise a pile-up measurement unit coupled to an output of the third output branch for receiving the third current signal and generating a pile-up measurement signal. The pile-up measurement unit may comprise a tunable filter for receiving the third current signal coupled to a fast current discriminator for generating a pile-up detection signal. The fast current discriminator may have a first input coupled to an output of the tunable filter and a second input for receiving a pile-up threshold value.

In some embodiments the readout circuit may further comprise a plurality of channel circuits, each coupled to a photodiode of the photomultiplier array, respectively. The photodiodes may be arranged in a common cathode configuration. Each channel circuit may further comprise means for connecting to a logic unit. Each means for connecting may have at least three outputs. A first output may carry a time measurement signal and may be coupled to a fast OR operator module. The fast OR operator module may be coupled to a second TDC and the second TDC may be coupled to a trigger and timing module of the logic unit. A second output may carry an energy measurement signal and may be coupled to an Energy & Position Computation module. A third output may carry a pile-up measurement signal and may be coupled to a Pile-up register module. Each channel circuit may further comprise means for connecting to a Bias and Thresholds module of the logic unit for providing each channel circuit with all Reference Voltages and Threshold Values.

In some embodiments each gain path of the readout circuit may comprise a plurality of amplifiers in a cascode configuration. In this case, the input amplifier may be a cascode amplifier of the input branch. In other embodiments, when no cascode configuration is present, the input amplifier may be a diode connected amplifier. Some of the amplifiers may be bipolar junction transistors and some field effect transistors.

Additional objects, advantages and features of embodiments of the invention will become apparent to those skilled in the art upon examination of the description, or may be learned by practice of the invention.

Throughout the description and claims the word "comprise" and variations of the word, are not intended to exclude other technical features, additives, components, or steps. Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim, are solely for attempting to increase the intelligibility of the claim, and shall not be construed as limiting the scope of the claim. Furthermore, the present invention covers all possible combinations of particular and preferred embodiments described herein.

### BRIEF DESCRIPTION OF THE DRAWINGS

Particular embodiments of the present invention will be described in the following by way of non-limiting examples, with reference to the appended drawings, in which:
FIG 1 is a block diagram of a readout circuit coupled to a photodiode according to an embodiment.
FIG 2 shows a circuit level diagram of a detail of a readout circuit for a photomultiplier array according to an embodiment.
FIG 3 shows a circuit level diagram of a readout circuit for a photomultiplier array according to an embodiment.

### DETAILED DESCRIPTION OF EMBODIMENTS

FIG 1 is a block diagram of a detail of a readout circuit according to an embodiment. Readout circuit 5 comprises resistor Rd and input stage 15. Resistor Rd is coupled at one end to the anode A of photodiode SiPM1. SiPM1 may be a photodiode having an anode A and a cathode C. The other end of resistor Rd is coupled, at node M, to the input In of current mirror circuit 20 of input stage 15. Current mirror circuit 20 shown in FIG 1 comprises input branch 22, first output branch 25 and second output branch 30. An input of input branch 22 is the input of current mirror circuit 20. Input branch 22 and first output branch 25 constitute a first gain path, having a first output Out. Accordingly, input branch 22 and second output branch 30 constitute a second gain path, having a second output Out. Input branch 22 comprises at least an input amplifier and each of the output branches comprises at least a mirror amplifier. However, any number of gain paths is possible with this configuration. Current mirror circuit 20 may be either a simple current mirror or a cascode current mirror. A current mirror is a circuit having multiple transistors connected in parallel, with their gates connected together and their sources connected to the same voltage.

Input stage 15 further comprises high frequency (HF) feedback loop circuit 40. A first end of HF loop circuit 40 is coupled, at node N, to the base of the input amplifier of input branch 22. A second end of HF loop circuit 40 is coupled to the input of input branch 22. A third end of HF loop circuit 40 is coupled to power voltage source Vdd and a fourth end of HF loop circuit 40 is coupled to ground. Input stage 15 further comprises low frequency (LF) loop circuit 50. A first end of LF loop circuit 50 is coupled to a fifth end of HF loop circuit 40. A second end of LF loop circuit 50 is coupled to the input of current mirror circuit 20. A third end of LF loop circuit 50 is coupled to a voltage supply reference Va_ref and a fourth end of LF loop circuit 50 is coupled to ground.

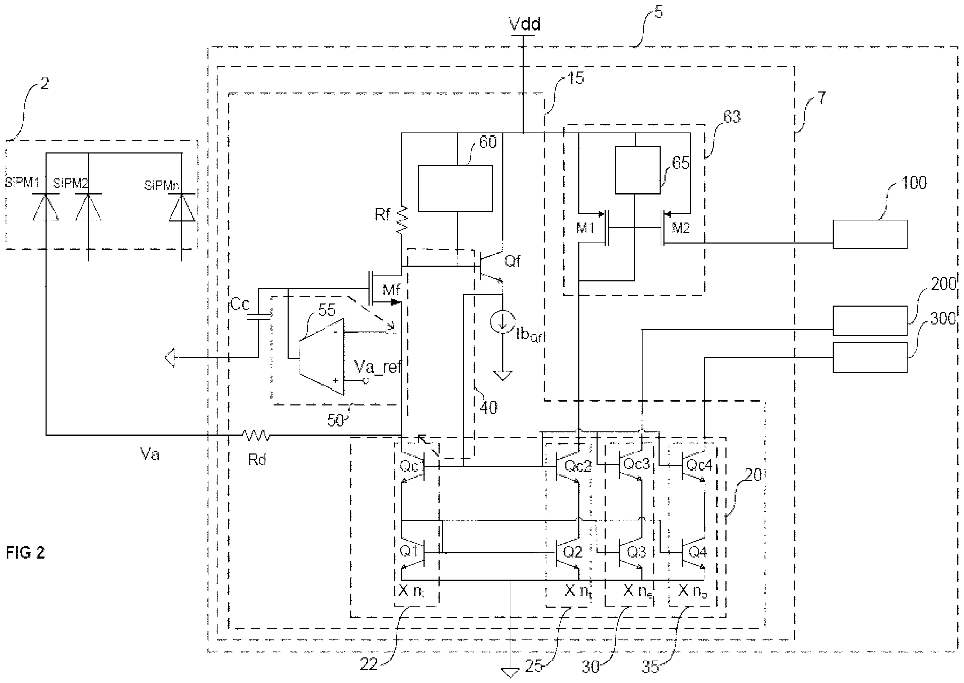

FIG 2 shows a circuit level diagram of a detail of a readout circuit for a photomultiplier array according to an embodiment. Readout circuit 5 comprises channel circuit 7. The anode of photodiode SiPM1 is coupled, via resistor Rd, to an input of current mirror circuit 20 of input stage 15 of channel circuit 7 of readout circuit 5. Input stage 15 comprises cascode current mirror circuit 20 having input branch 22 and three output branches 25, 30, 35 (thus constituting three gain paths), a HF loop circuit 40, a LF loop circuit 50 and servo controller 60.

The anode of photodiode SiPM1 is coupled to first end of resistor Rd. The other end of resistor Rd is coupled to an input of cascode current mirror circuit 20. In FIG 2, current mirror circuit 20 is a current amplifier implemented with Bipolar Junction Transistors (BJTs) and more specifically with Heterojunction Bipolar Transistors (HBTs). However, FETs could be used according to the requirements of a specific application.

Transistors Q1 and Qc1 form the input branch of the three gain paths. Q2 with Qc2, Q3 with Qc3 and Q4 with Qc4 form the first, second and third output branches, respectively. The first gain path comprises a cascode current mirror implemented with npn bipolar transistors Q1 and Q2 each in series with Qc1 and Qc2, respectively. The second gain path comprises a cascode current mirror implemented with npn bipolar transistors Q1 and Q3 each in series with Qc1 and Qc3, respectively. Accordingly, the third gain path comprises a cascode current mirror implemented with npn bipolar transistors Q1 and Q4 each in series with Qc1 and Qc4, respectively. The other end of resistor Rd is coupled to Collector of Qc1. Emitter of Qc1 is coupled to Collector and Base of Q1 and to Base of Q2. Base of Qc1 is coupled to base of Qc2. Emitter of Qc2 is coupled to Collector of Q2. Finally, Emitters of Q1 and Q2 are connected to ground.

HF loop circuit 40 is formed by amplifiers Qc1, Mf and Qf. LF loop circuit 50 is formed by OTA 55 and amplifier Mf. In the HF loop circuit, emitter of amplifier Mf is coupled to other end of resistor Rd. Collector of amplifier Mf is coupled to base of transistor Qf, to one end of Servo controller 60 and to one end of resistor Rf. Emitter of transistor Qf is coupled to the base of Qc1 and to earth via current source IbQf. Collector of transistor Qf, the other end of resistor Rf and the other end of Servo controller 60 are coupled to Vdd.

Servo controller 60 is used because process variations (specially of Rf) may cause large uncertainties on the operating point of HF loop circuit and more particularly on the quiescent current on Mf. Therefore, a replica of the input stage may be used to monitor this current. The monitored current is compared with a reference current, obtaining an error signal. A negative feedback loop controls a current source in each channel to minimize this error signal. The replica to monitor the current may be a common block for all the channels.

LF loop circuit 50 is formed by OTA 55 and amplifier Mf. The other end of resistor Rd is further coupled to the negative input of high gain OTA 55. The positive input of OTA 55 is coupled to reference voltage Va_ref. The output of OTA 55 is coupled to earth via Capacitor Cc and to base of amplifier Mf.

The HF loop circuit acts as a shunt feedback via transistor Mf. It introduces negative feedback to stabilize voltage at Va node. Of particular importance is the introduction of transistor Qf that acts as a voltage follower to increase the voltage range of Va. This is of importance especially in cases where the ability to modify Va with 1 V range is required. Such functionality is enabled with the introduction of transistor Qf in the HF loop circuit.

The second feedback, the LF loop circuit, is added to control the DC and LF value of Va. Transistor Mf is part both of the HF and LF loop circuits. Transistor Mf is a common base amplifier that senses voltage variations in Va, those variations are converted to a current signal. The current signal is converted to voltage with resistor Rf. The small signal voltage variation is transmitted by transistor Qf emitter follower to the base of the cascode transistor of the current mirror. Transistor Mf acts as a common emitter amplifier that closes the negative feedback loop.

LF loop circuit is a negative feedback loop via a high gain and low BW OTA 55. It may allow accurate control of Va voltage at DC/LF. Feedback loop of LF loop circuit 50 is closed by transistor Mf. This virtual short circuit makes Va approximately equal to Va_ref. Va_ref may be set accurately (by a stable voltage reference and programmed by a DAC), hence Va may be known and well controlled.

A first effect of this feedback on the input stage is that voltage at Va node may be accurately controlled. Without the LF loop circuit, the voltage at node Va would be the voltage at Mf gate minus the Vgs voltage of Mf. Voltage Vgs of Mf may change a lot with temperature and process variations and also may depend on the circuit operating point.

A second effect of this feedback may be seen at the final output. In a SiPM array it is important to control the voltage of each SiPM anode (Va) since, typically, cathode is common (Vc) for all. Therefore, it is very important to control the Vc-Va=Vca voltage since operating parameters of the SiPM such as gain or photodetection efficiency depend on the overvoltage Vov, where Vov=Vca-Vb, and Vb is the breakdown voltage of the SiPM. Vb is a parameter with significant tolerances, i.e. it changes from element to element of the array (from SiPM to SiPM). As a result, adjusting the Vca allows equalization of Vov for all the SiPMS. This translates in more uniform response which in turn provides better resolution.

The Collector of Qc2 is coupled to High Gain Unit 63. High Gain Unit 63 comprises a current mirror circuit with pnp transistors M1 and M2 and Saturation Control Circuit 65. Collector of Qc2 is coupled to Base of M1 and M2, to Collector of M1 and to one end of Saturation Control Circuit 65. Emitter of M1, emitter of M2 and second end of SCC 65 are coupled to Vdd. Collector of M2 may be coupled to Time Measurement Unit 100.

Second gain path 30 comprises npn cascode transistors Qc3 and Q3. Emitter of Qc3 is coupled to Collector of Q3. Base of Qc3 is couple to base of Qc1. Base of Q3 is coupled to Base of Q1, Q2 and to Emitter of Qc1. Emitter of Q3 is coupled to ground. Collector of Qc3 is coupled to Energy Measurement Unit 200.

The third gain path comprises npn cascode transistors Qc4 and Q4. Emitter of Qc4 is coupled to Collector of Q4. Base of Qc4 is couple to base of Qc1. Base of Q4 is coupled to Base of Q1, Q2 and Q3 and to Emitter of Qc1. Emitter of Q4 is coupled to ground. Collector of Qc4 is coupled to Pile-Up Measurement Unit 300.

The dual feedback loop decreases the input impedance. A first effect of this is that it increases the bandwidth for all outputs of the input stage. A second effect is that it improves linearity for all outputs of the input stage. This is particularly important for energy measurements. As a consequence, time and energy measurement resolution is improved at the final outputs of the channel circuit.

FIG 3 shows a circuit level diagram of a readout circuit for a photomultiplier array according to an embodiment.

SiPM array 2 comprises n SiPM photodiodes. The anode of each SiPM diode is read by each channel circuit C1 to Cn. The elements of C1 are identical to the elements of all channels C1 to Cn. The anode of photodiode SiPM1 is coupled to input stage 15 of channel circuit C1. Input stage 15 may be similar to input stage 15 of FIG 2. Input stage 20 comprises a current mirror circuit for generating three gain paths.

The output of the first gain path is coupled to High Gain Unit 63. High Gain Unit 63 is similar to high gain unit 63 of FIG 2. It comprises a current mirror circuit with pnp transistors M1 and M2 and Saturation Control Circuit 65. The output of high gain unit 63 is coupled to time measurement unit (TMU) 100. The output of the second gain path is coupled to Energy Unit (EU) 200. The output of third gain path is coupled to Pile-up Measurement Unit (PMU) 300.

TMU 100 comprises Fast Current Discriminator 110. Fast Current Discriminator 110 receives a current signal from high gain unit 63 and compares it with threshold value ThT. The output of Fast Current Discriminator 110 is input to Fast OR gate 360 of Output Stage 350.

EU 200 comprises Tunable Filter 205 and a Time over Threshold Circuit (ToT) connected in series. ToT comprises Integrator block 210, Hysteresis comparator 220 and TDC 230 connected in series. Tunable Filter 205 shapes the signal to make it narrower. Tunable filter 205 is a high pass filter differentiator, providing a short pulse and, thus, avoiding pile-up effects between 2 consecutive pulses. It includes a tunable pole-zero compensation to remove the undershoot caused by the differentiation of the long tail of the input pulse. As this tail depends a lot on the scintillator, Tunable Filter 205 needs to be tunable to be able to work with different scintillators. Integrator block 210 includes Amplifier 212 with negative feedback including Tunable Current Source 214 and Tunable Capacitor 216 in parallel. Integrator block 210 integrates the signal. It is discharged by a constant current, so the duration of the integrator output is proportional to the input signal charge which, in turn, is proportional to the light and therefore the energy deposited in the scintillator or in other detector. The feedback is tunable to allow adjusting of the gain and of the slope of the discharge which, in turn, allows scaling of the conversion time. The output of Integrator block 210 is coupled to Hysteresis comparator 220 and the output of Hysteresis comparator 220 to TDC 230. Hysteresis comparator 220 is used to encode this energy or charge information in the duration of a pulse. It has hysteresis because of the slow discharge.

This type of signal processing is known as Time Over Threshold. Tunable filter 205 and integrator block 210 are dedicated in order to achieve a linear response. Linear response is required to improve energy measurement resolution.

Different elements of the energy measurement unit may be tuned to adapt to different applications or to different scintillators, where different SiPM gain, pulse rate and energy resolution are expected. Furthermore, tunability may compensate for process variations of the components.

First TDC 230 is a time-to-digital converter (TDC) that may be implemented with only digital electronics such as FPGA. As a result, no Analog Digital Converter is necessary. This could lower power consumption to as low as 1 mW for each TDC employed, as ADCs consume much more power than TDCs.

PMU 300 comprises Tunable Filter 305 and Fast Current Discriminator 310 in series. Tunable Filter 305, similarly to Tunable Filter 205, shapes the signal to make it narrower and it is tunable so that it may be used to account for different scintillator characteristics. Fast current discriminator 310 detects if more than one pulse is present in a single channel. If it is the case a flag bit is set to 1 (per channel).

Each of the outputs of TMU 100, EU 200 and PMU 300 is input to Output Stage 350. Output Stage 350 comprises Fast OR Gate 360, second TDC 370 and Logic Unit 400. Fast OR Gate 360 comprises at least n inputs and one output. Fast OR Gate 360 receives each output signal from each TMU of Channels 1 to n at its n inputs, respectively. Its output is 1 when at least one of the n Fast Current Discriminators of the TMUs indicates that a signal has been detected above ThT. It is coupled in series with second TDC 370. The output of second TDC 370 is a digital indication of a detected impact event. This information is input to Trigger& Timing Module 410 of Logic Unit 400. Trigger& Timing Module 410 measures the leading edge timing with respect to a reference system clock and triggers Control Module 450 to instruct Energy & Position Computation Module 420 to start conversion. Control Module 450 receives signals and gives instructions to all Modules of Logic Unit 400. Energy & Position Computation Module 420 comprises n inputs that receive the n outputs of the n EUs, respectively, and a communication interface with Control Module 450. Pile-Up Register Module 430 receives n signals from the n PMUs at n inputs, respectively. Each bit in Pile-Up Register Module 430 corresponds to more than one hit in a channel. Logic Unit 400 further comprises Bias and Thresholds Module 460 that provides all bias voltages and thresholds to Channels 1 to n. Finally, Logic Unit 400 comprises Serial Interface 470 that communicates with a computer to read/write control registers of the system (such as thresholds, currents and capacitance settings, etc) and to send the output data to peripherals and monitors.

## Claims

1. A readout circuit (5) coupleable to at least one photodiode of a photomultiplier array (2), the readout circuit (5) comprising at least one channel circuit (7)
said at least one channel circuit (7) is coupleable to the at least one photodiode, the channel circuit comprising:
a first resistor (Rd), coupleable at one end to the anode of the at least one photodiode, and
an input stage (15), coupled to the other end of the first resistor, the input stage comprising:
a current mirror configuration (20) having at least a first gain path, the first gain path having
an input branch (22) with at least one input amplifier and
a first output branch (25) with at least one mirror amplifier having its base and emitter connected to the base and emitter of the input amplifier of the input branch;
**characterized in that** it further comprises
a high frequency feedback circuit (40) arranged between the base of the input amplifier and the input of the current mirror configuration, the high frequency feedback circuit (40) comprises at least a first amplifier (Qf) and a second amplifier (Mf),
the first amplifier (Qf) having a collector coupled to a power supply voltage (Vdd), a base coupled to a collector of the second amplifier (Mf) and an emitter coupled to the base of the input amplifier and to earth via a current source,
the second amplifier (Mf) having a base coupled to earth via a first capacitor and an emitter coupled to the input of the current mirror configuration; and
wherein a low frequency feedback circuit (50) is coupled between the base of the second amplifier (Mf) and the input of the input branch (22).

2. The readout circuit (5) according to claim 1, further comprising a servo controller (60) having a first end coupled to the base of the first amplifier (Qf) and a second end coupled to the power supply voltage (Vdd).

3. The readout circuit (5) according to claim 2, further comprising a second resistor (Rf) coupled between the collector of the second amplifier (Mf) and the power supply voltage (Vdd).

4. The readout circuit according to claim 1, wherein the low frequency feedback circuit comprises an Operational Transconductance Amplifier (OTA) (55) having a positive input coupled to a voltage supply reference, a negative input coupled to the input of the input branch and an output coupled to the base of the second amplifier (Mf).

5. The readout circuit (5) according to any of claims 1 to 4, wherein the output branch of the first gain path further comprises a third amplifier (M1), a fourth amplifier (M2) and a saturation control circuit (65), wherein
the third amplifier (M1) has a collector and a base coupled to the output of the mirror amplifier and an emitter coupled to the power supply voltage,
the fourth amplifier (M2) has a base coupled to the base of the third amplifier and an emitter coupled to the power supply voltage, and
the saturation control circuit (65) is coupled between the power supply voltage and the base of the third and fourth amplifiers,
wherein the collector of the fourth amplifier (M2) is an output of the first gain path.

6. The readout circuit (5) according to any of claims 1 to 5, further comprising:
a time measuring unit (100) coupled to an output of the first gain path for receiving a first current signal and generating a time measurement signal,
wherein the time measuring unit comprises a fast current discriminator (110) for generating the time measurement signal, the fast current discriminator (110) having a first input for receiving the first current signal and a second input for receiving a time threshold value.

7. The readout circuit according to any of claims 1 to 6, wherein
the current mirror configuration further comprises a second gain path (30) having a second output branch for generating a second current signal and
the readout circuit (5) further comprises an energy measurement unit (200), coupled to an output of the second output branch, for receiving the second current signal and generating an energy measurement signal.

8. The readout circuit (5) according to claim 7, wherein the energy measuring unit (200) comprises a first part in series with a second part, wherein the first part comprises a tunable filter (205) coupled to a tunable integrator block (210), and the second part comprises a hysteresis comparator (220) coupled to a first TDC (230).

9. The readout circuit (5) according to any of claims 7 to 8, the current mirror configuration further comprises a third gain path (35) having a third output branch for generating a third current signal and
the readout circuit further comprises a pile-up measurement unit (300), coupled to an output of the third output branch, for receiving the third current signal and generating a pile-up measurement signal.

10. The readout circuit (5) according to claim 9, the pile-up measurement unit (300) comprising a tunable filter (305) for receiving the third current signal coupled to a fast current discriminator (310) for generating a pile-up detection signal,
wherein the fast current discriminator (310) has a first input coupled to an output of the tunable filter (305) and a second input for receiving a pile-up threshold value.

11. The readout circuit (5) according to any of claims 1 to 10, further comprising a plurality of channel circuits (C1,..,Cn), each coupled to a photodiode of the photomultiplier array, respectively, the photodiodes arranged in a common cathode configuration.

12. The readout circuit (5) according to claim 11, each channel circuit further comprising means for connecting to a logic unit (400),
each means for connecting having at least three outputs, wherein
a first output carries a time measurement signal and is coupled to a fast OR operator module (360), the fast OR operator module (360) being coupled to a second TDC (370) and the second TDC (370) being coupled to a trigger and timing module (400) of the logic unit;
a second output carries an energy measurement signal and is coupled to an energy & position computation module (420); and
a third output carries a pile-up measurement signal and is coupled to a pile-up register module (430).

13. The readout circuit according to any of the previous claims wherein each gain path comprises a plurality of amplifiers ([Q2,QC2], [Q3,QC3], ([Q4,QC4]) in a cascode configuration.

## Patentansprüche

1. Eine mit mindestens einer Photodiode eines Photovervielfacherarrays (2) koppelbare Ausleseschaltung (5), wobei die Ausleseschaltung (5) mindestens eine Kanalschaltung (7) umfasst
wobei die mindestens eine Kanalschaltung (7) mit der mindestens einen Photodiode koppelbar ist, wobei die Kanalschaltung folgendes umfasst:
einen ersten Widerstand (Rd), der an einem Ende mit der Anode der mindestens einen Photodiode koppelbar ist, und
eine Eingangsstufe (15), die mit dem anderen Ende des ersten Widerstands gekoppelt ist, wobei die Eingangsstufe folgendes umfasst:
eine Stromspiegelschaltung (20), die mindestens einen ersten Verstärkungspfad hat, wobei der erste Verstärkungspfad folgendes hat
einen Eingangszweig (22) mit mindestens einem Eingangsverstärker und einen ersten Ausgangszweig (25) mit mindestens einen Spiegelverstärker, dessen Basis und Emitter mit der Basis und dem Emitter des Eingangsverstärkers des Eingangszweigs verbunden sind;
**dadurch gekennzeichnet, dass** sie weiterhin folgendes umfasst
eine zwischen der Basis des Eingangsverstärkers und dem Eingang der Stromspiegelschaltung angeordnete Hochfrequenz-Rückkopplungsschaltung (40),
wobei die Hochfrequenz-Rückkopplungsschaltung (40) mindestens einen ersten Verstärker (Qf) und einen zweiten Verstärker (Mf) umfasst,
wobei der erste Verstärker (Qf) einen mit einer Versorgungsspannung (Vdd) gekoppelten Kollektor hat, eine mit einem Kollektor des zweiten Verstärkers (Mf) gekoppelte Basis und einen mit der Basis des Eingangsverstärkers und über eine Stromquelle mit Masse verbundenen Emitter hat,
wobei der zweite Verstärker (Mf) eine mit Masse über einen ersten Kondensator verbundene Basis hat und einen mit dem Eingang der Stromspiegelschaltung verbundenen Emitter hat; und
wobei eine Niederfrequenz-Rückkopplungsschaltung (50) zwischen der Basis des zweiten Verstärkers (Mf) und dem Eingang des Eingangszweigs (22) geschaltet ist.

2. Die Ausleseschaltung (5) nach Anspruch 1, weiterhin umfassend eine Servosteuereinheit (60), die ein mit der Basis des ersten Verstärkers (Qf) gekoppeltes erstes Ende hat und ein mit der Versorgungsspannung (Vdd) gekoppeltes zweites Ende hat.

3. Die Ausleseschaltung (5) nach Anspruch 2, weiterhin umfassend einen zwischen dem Kollektor des zweiten Verstärkers (Mf) und der Versorgungsspannung (Vdd) geschalteten zweiten Widerstand (Rf).

4. Die Ausleseschaltung nach Anspruch 1, wobei die Niederfrequenz-Rückkopplungsschaltung einen Transkonduktanzverstärker (VC-OPC) (55) umfasst, der einen mit einer Referenzspannungsquelle gekoppelten positiven Eingang hat, einen mit dem Eingang des Eingangszweigs gekoppelten negativen Eingang hat und einen mit der Basis des zweiten Verstärkers (Mf) gekoppelten Ausgang hat.

5. Die Ausleseschaltung (5) nach einem der Ansprüche 1 bis 4, wobei der Ausgangszweig des ersten Verstärkungspfads weiterhin einen dritten Verstärker (M1), einen vierten Verstärker (M2) und eine Sättigungsregelungsschaltung (65) umfasst, wobei
der dritte Verstärker (M1) einen Kollektor und eine mit dem Ausgang des Spiegelverstärkers gekoppelte Basis hat und einen mit der Versorgungsspannung gekoppelten Emitter hat,
wobei der vierte Verstärker (M2) eine mit der Basis des dritten Verstärkers gekoppelte Basis und einen mit der Versorgungsspannung gekoppelten Emitter hat, und
wobei die Sättigungsregelungsschaltung (65) zwischen der Versorgungsspannung und der Basis des dritten und vierten Verstärkers gekoppelt ist,
wobei der Kollektor des vierten Verstärkers (M2) ein Ausgang des ersten Verstärkungspfads ist.

6. Die Ausleseschaltung (5) nach einem der Ansprüche 1 bis 5, weiterhin umfassend:
eine mit einem Ausgang des ersten Verstärkungspfads gekoppelte Zeitmesseinheit (100) zum Empfang von einem ersten Stromsignal und zur Erzeugung eines Zeitmesssignals,
wobei die Zeitmesseinheit einen schnellen Stromdiskriminator (110) zur Erzeugung des Zeitmesssignals umfasst, wobei der schnelle Stromdiskriminator (110) einen ersten Eingang zum Empfang des ersten Stromsignals und einen zweiten Eingang zum Empfang von einem Zeitschwellenwert hat.

7. Die Ausleseschaltung nach einem der Ansprüche 1 - 6, wobei
die Stromspiegelschaltung weiterhin einen zweiten Verstärkungspfad (30) umfasst, der einen zweiten Ausgangszweig zur Erzeugung von einem zweiten Stromsignal hat und
die Ausleseschaltung (5) weiterhin eine Energiemesseinheit (200), die mit einem Ausgang des zweiten Ausgangszweigs gekoppelt ist, zum Empfang des zweiten Stromsignals und zur Erzeugung von einem Energiemesssignal umfasst.

8. Die Ausleseschaltung (5) nach Anspruch 7, wobei die Energiemesseinheit (200) einen mit einem zweiten Teil in Reihe geschalteten ersten Teil umfasst, wobei der erste Teil einen mit einem abstimmbaren Integrierblock (210) gekoppelten abstimmbaren Filter (205) umfasst, und der zweite Teil einen mit einem ersten TDC (230) gekoppelten Hysteresevergleicher (220) umfasst.

9. Die Ausleseschaltung (5) nach einem der Ansprüche 7 bis 8, wobei die Stromspiegelschaltung weiterhin einen dritten Verstärkungspfad (35) umfasst, der einen dritten Ausgangszweig zur Erzeugung von einem dritten Stromsignal hat und
wobei die Ausleseschaltung weiterhin eine Pile-up-Messeinheit (300), die mit einem Ausgang des dritten Ausgangszweigs gekoppelt ist, zum Empfang des dritten Stromsignals und zur Erzeugung eines Pile-up-Messsignals umfasst.

10. Die Ausleseschaltung (5) nach Anspruch 9, wobei die Pile-up-Messeinheit (300) einen abstimmbaren Filter (305) zum Empfang des dritten Stromsignals umfasst, der mit einem schnellen Stromdiskriminator (310) zur Erzeugung eines Pile-up-Ermittlungssignals gekoppelt ist,
wobei der schnelle Stromdiskriminator (310) einen ersten Eingang hat, der mit einem Ausgang des abstimmbaren Filters (305) gekoppelt ist und einen zweiten Eingang zum Empfang von einem Pile-up-Schwellenwert hat.

11. Die Ausleseschaltung (5) nach einem der Ansprüche 1 bis 10, weiterhin umfassend eine Vielzahl von Kanalschaltungen (C1,..,Cn), die jeweils mit einer Photodiode des Photovervielfacherarrays gekoppelt sind, wobei die Photodioden in einer herkömmlichen Kathodenanordnung angeordnet sind.

12. Die Ausleseschaltung (5) nach Anspruch 11, wobei jede Kanalschaltung ein Mittel zur Verbindung mit einer logischen Einheit (400) umfasst,
wobei jedes Verbindungsmittel mindestens drei Ausgänge hat, wobei
einen ersten Ausgang ein Zeitmesssignal führt und mit einem schnellen ODER-Operator-Modul (360) gekoppelt ist, wobei das schnelle ODER-Operator-Modul (360) mit einem zweiten TDC (370) gekoppelt ist und der zweite TDC (370) mit einem "Trigger und Timing"-Modul (400) der logischen Einheit gekoppelt ist;
wobei ein zweiter Ausgang ein Energiemesssignal führt und mit einem Energie-und-Position-Berechnungsmodul (420) gekoppelt ist; und
ein dritter Ausgang ein Pile-up-Messsignal führt und mit einem Pile-up-Registermodul (430) gekoppelt ist.

13. Die Ausleseschaltung nach einem der vorhergehenden Ansprüche, wobei jeder Verstärkungspfad eine Vielzahl von Verstärkern ([Q2,QC2], [Q3,QC3], ([Q4,QC4]) in Kaskodenschaltung umfasst.

## Revendications

1. Un circuit de lecture (5) pouvant être couplé à au moins une photodiode d'un réseau de photomultiplicateurs (2), le circuit de lecture (5) comprenant au moins un circuit de canal (7),
dans lequel ledit au moins un circuit de canal (7) peut être couplé à l'au moins une photodiode, le circuit de canal comprenant :
une première résistance (Rd), pouvant être couplée par une extrémité à l'anode de l'au moins une photodiode, et
un étage d'entrée (15), couplée à l'autre extrémité de la première résistance, l'étape d'entrée comprenant :
une configuration de miroir de courant (20) ayant au moins une première voie d'amplification, la première voie d'amplification ayant
une dérivation d'entrée (22) avec au moins un amplificateur d'entrée et une première dérivation de sortie (25) avec au moins un amplificateur de miroir ayant sa base et son émetteur reliés à la base et à l'émetteur de l'amplificateur d'entrée de la dérivation d'entrée ;
**caractérisé en ce qu'**il comprend en outre :
un circuit de rétroaction haute fréquence (40) disposé entre la base de l'amplificateur d'entrée et l'entrée de la configuration de miroir de courant, dans lequel le circuit de rétroaction haute fréquence (40) comprend au moins un premier amplificateur (Qf) et un deuxième amplificateur (Mf),
le premier amplificateur (Qf) ayant un collecteur couplé à une tension d'alimentation (Vdd), une base couplée à un collecteur du deuxième amplificateur (Mf) et un émetteur relié à la base de l'amplificateur d'entrée et à la terre moyennant une source de courant,
le deuxième amplificateur (Mf) ayant une base reliée à la terre moyennant un premier condensateur et un émetteur couplé à l'entrée de la configuration de miroir de courant ; et
dans lequel un circuit de rétroaction basse fréquence (50) est couplé entre la base du deuxième amplificateur (Mf) et l'entrée de la dérivation d'entrée (22).

2. Le circuit de lecture (5) selon la revendication 1, comprenant en outre un servorégulateur (60) ayant une première extrémité couplée à la base du premier amplificateur (Qf) et une deuxième extrémité couplée à la tension d'alimentation (Vdd).

3. Le circuit de lecture (5) selon la revendication 2, comprenant en outre une deuxième résistance (Rf) couplée entre le collecteur du deuxième amplificateur (Mf) et la tension d'alimentation (Vdd).

4. Le circuit de lecture selon la revendication 1, dans lequel le circuit de rétroaction basse fréquence comprend un amplificateur opérationnel à transconductance (OTA) (55) ayant une entrée positive couplée à une tension d'alimentation de référence, une entrée négative couplée à l'entrée de la dérivation d'entrée et une sortie couplée à la base du deuxième amplificateur (Mf).

5. Le circuit de lecture (5) selon l'une quelconque des revendications 1 à 4, dans lequel la dérivation de sortie de la première voie d'amplification comprend en outre un troisième amplificateur (M1), un quatrième amplificateur (M2) et un circuit de régulation de la saturation (65), dans lequel
le troisième amplificateur (M1) a un collecteur et une base couplée à la sortie de l'amplificateur de miroir et un émetteur couplé à la tension d'alimentation,
le quatrième amplificateur (M2) a une base couplée à la base du troisième amplificateur et un émetteur couplé à la tension d'alimentation, et
le circuit de régulation de la saturation (65) est couplé entre la tension d'alimentation et la base des amplificateurs troisième et quatrième,
dans lequel le collecteur du quatrième amplificateur (M2) est une sortie de la première voie d'amplification.

6. Le circuit de lecture (5) selon l'une quelconque des revendications 1 à 5, comprenant en outre :
une unité de mesure de temps (100) couplée à une sortie de la première voie d'amplification pour recevoir un premier signal de courant et générer un signal de mesure de temps,
dans lequel l'unité de mesure de temps comprend un discriminateur de courant rapide (110) pour générer le signal de mesure de temps, le discriminateur de courant rapide (110) ayant une première entrée pour recevoir le premier signal de courant et une deuxième entrée pour recevoir une valeur de seuille du temps.

7. Le circuit de lecture selon l'une quelconque des revendications 1 - 6, dans lequel
la configuration de miroir de courant comprend en outre une deuxième voie d'amplification (30) ayant une deuxième dérivation de sortie pour générer un deuxième signal de courant et
le circuit de lecture (5) comprend en outre une unité de mesure d'énergie (200), couplée à une sortie de la deuxième dérivation de sortie, pour recevoir le deuxième signal de courant et générer un signal de mesure d'énergie.

8. Le circuit de lecture (5) selon la revendication 7, dans lequel l'unité de mesure d'énergie (200) comprend une première partie en série avec une deuxième partie, dans lequel la première partie comprend un filtre accordable (205) couplé à un bloc intégrateur accordable (210), et la deuxième partie comprend un comparateur à hystérésis (220) couplé à un premier convertisseur TDC (230).

9. Le circuit de lecture (5) selon l'une quelconque des revendications 7 à 8, dans lequel la configuration de miroir de courant comprend en outre une troisième voie d'amplification (35) ayant une troisième dérivation de sortie pour générer un troisième signal de courant et
dans lequel le circuit de lecture comprend en outre une unité de mesure d'empilements (300), couplée à une sortie de la troisième dérivation de sortie, pour recevoir le troisième signal de courant et générer un signal de mesure d'empilements.

10. Le circuit de sortie (5) selon la revendication 9, l'unité de mesure d'empilements (300) comprenant un filtre accordable (305) pour recevoir le troisième signal de courant couplé à un discriminateur de courant rapide (310) pour générer un signal de détection d'empilement,
dans lequel le discriminateur de courant rapide (310) a une première entrée couplée à une sortie du filtre accordable (305) et une deuxième entrée pour recevoir une valeur de seuil d'empilement.

11. Le circuit de lecture (5) selon l'une quelconque des revendications 1 à 10, comprenant en outre une pluralité de circuits de canal (C1,..,Cn), étant chacun couplé à une photodiode d'un réseau de photomultiplicateurs, respectivement, étant les photodiodes disposées dans une configuration de cathode ordinaire.

12. Le circuit de lecture (5) selon la revendication 11, chaque circuit de canal comprenant en outre un moyen de connexion a une unité logique (400),
chaque moyen de connexion ayant au moins trois sorties, dans lequel
une première sortie porte un signal de mesure de temps et est couplée à un module d'opérateurs OU rapide (360), le module d'opérateurs OU rapide (360) étant couplé à un deuxième TDC (370) et le deuxième TDC (370) étant couplé à un module « trigger and timing » (400) de l'unité logique ;
une deuxième sortie porte un signal de mesure d'énergie et est couplée à un module de computation d'énergie et de position (420) ; et
une troisième sortie porte un signal de mesure d'empilements et est couplée à un module de registre d'empilements (430).

13. Le circuit de lecture selon l'une quelconque des revendications précédentes, dans lequel chaque voie d'amplification comprend une pluralité d'amplificateurs ([Q2,QC2], [Q3,QC3], ([Q4,QC4]) dans un montage du type cascode.
